# EUROPEAN PATENT APPLICATION

(11) **EP 1 493 470 A1**
(43) Date of publication of application: **05.01.2005**
(21) Application number: 04015655.6
(22) Date of filing: 02.07.2004
(51) Int. Cl.: A63F 13/00

(54) **Game providing system, game server, and gaming machine**

(30) Priority: 04.07.2003 JP 2003271140; 04.07.2003 JP 2003271141
(71) Applicant: Aruze Corp., Tokyo 135-0063 (JP)
(72) Inventor: Nara, Toshiomi, Tokyo 135-0063 (JP)
(74) Representative: HOFFMANN - EITLE

(57) **Abstract**

A game providing system comprises a portable terminal and a game server. The portable terminal can be connected to the game server via the Internet. The game server provides a game to the connected portable terminal via the Internet. The game server comprises a calculating section and a point providing section. The calculating section calculates a number of wins by summing up the number that the player of the portable terminal wins the game. The point providing section provides a predetermined point to the player in accordance with the number of wins calculated by the calculating section.

## Description

### BACKGROUND OF THE INVENTION

### Field of the Invention

The present invention relates to a game providing system, a game server, and a gaming machine.

### Related Background of the Invention

Various kinds of gaming machines or game providing systems, which provide a game to players, are available. As one of such gaming machines, a mahjong gaming machine, which is configured so as to operate as an opponent against a player so that the player can enjoy mahjong games, is known. As the mahjong gaming machine of this type, the following is known. That is, a TV game type mahjong gaming machine, which incorporates a central processing unit in the main body of the gaming machine, and the central processing unit carries out the processing as the opponent of the player, thereby the player can enjoy the mahjong game (for example, refer to document 1: Japanese Utility Model Publication No. 4-70089).

Also, the following game providing system is known; i.e., it is configured so that registered members enjoy games in a game site through a portable terminal via the Internet. As a game providing system of this type, a system, which is configured so as to provide points entitling the members to receive a predetermined privilege, is known (refer to, for example, document 2: Japanese Patent Application Laid-Open No. 2002-219281).

### SUMMARY OF THE INVENTION

However, viewed from the player, the above mahjong gaming machine disclosed in the document 1 simply carries out the processing as a specific opponent. Accordingly, the player has to always, take the same opponent on like mahjong games. Therefore, as the player continues to play the mahjong game on the mahjong gaming machine, the player gets tired of the mahjong game gradually losing interest in the mahjong game, and finally gives up playing the mahjong game. In such situation, the mahjong gaming machine is utterly given up playing any more.

Also, in the game providing system disclosed in the above document 2, it is configured so that the members are simply imparted with points, which entitle him/her to receive a predetermined privilege. As the member gets tired of the game, the member tends to not access to the game site.

Accordingly, an object of the present invention is to provide a game providing system, a game server and a gaming machine, which are capable of encouraging players to utilize the games.

A game providing system according to the present invention comprises a portable terminal for making connection to the Internet, and a game server that provides a game to the portable terminal connected thereto via the Internet. The game server includes calculating means that calculates a number of wins by summing up a number that a player of the portable terminal has won the game, and point providing means that provides predetermined point to the player in accordance with the number of wins calculated by the calculating means.

According to the present invention, depending on the number that the player wins the game, the predetermined point is provided to the player. Accordingly, a player, who desires to be provided with the predetermined point, is encouraged to utilize the game.

In the present invention, the game server may provide a mahjong game. In this arrangement, the point providing means can increase the initial score of the player as the predetermined point.

According to the present invention, it is arranged so that, when a player wins the mahjong game, the number of wins is gradually incremented, and the initial point is increased in accordance with the number of wins. Accordingly, the player, who desires to increase the initial point, is encouraged to utilize the game.

In the present invention, the game server can provide the point as a predetermined point, which is exchangeable for predetermined goods or services. In this arrangement, the point providing means provides bonus point, which increases in accordance with the number of wins, in every time when the number of wins of the player of the portable terminal in the game reaches a predetermined number.

According to the present invention, every time when the number of wins in the game, which the player has played, reaches a predetermined number, the bonus point provided to the player increases according to the number of wins. Accordingly, the more the number of wins increases, the more the player expects to be provided with a large bonus point, and thus, accesses to the game site provided by the game server. As a result, the ratio of access to the game site is increased and the utilization of the game is increased.

Further, in the present invention, the calculating means preferably calculates the number of wins for every particular character, which is an opponent character in the game.

According to the present invention, the number of wins is calculated for every particular character. Accordingly, the player can easily increase the point by repeating the games against a character, which is a particular opponent character thereof. As a result, the player is encouraged to play the game against the particular character; and thus, to access to the game site provided by the game server resulting in an increased utilization of the games.

The gaming machine according to the present invention comprises calculating means that calculates a number of wins by summing up the number that a player of the portable terminal has won the game, and point providing means that provides a predetermined point to the player in accordance with the number of wins calculated by the calculating mean.

The gaming machine according to the present invention may provide a mahjong game. In this arrangement, the point providing means can increase the initial score of the player as the predetermined point.

In the gaming machine according to the present invention, the calculating means preferably calculates the number of wins for every particular character, which is an opponent character in the game.

### BRIEF DESCRIPTION OF THE DRAWINGS

Fig. 1 is a diagram showing the entire configuration of a mahjong game providing system according to an embodiment of the present invention;
Fig. 2 is a block diagram showing a configuration of a mahjong game server shown in Fig. 1;
Fig. 3 is a diagram showing data items in a membership master;
Fig. 4 is a diagram showing data items in a wins management master;
Fig. 5 is a diagram showing data items in an initial score management master;
Fig. 6A is a diagram showing an example of data items in an initial score conversion table;
Fig. 6B is a diagram showing data items in another initial score conversion table;
Fig. 7 is a flowchart showing processing procedure of the mahjong game server;
Fig. 8 is a flowchart showing the procedures of the number of wins calculation processing;
Fig. 9 is a flowchart showing the procedures of an initial score setting processing;
Fig. 10 is a block diagram showing a configuration of a mahjong gaming machine according to an embodiment of the present invention;
Fig. 11 is a diagram typically showing a game providing system according to an embodiment of the present invention;
Fig. 12 is a block diagram showing the configuration of the game server shown in Fig. 11;
Fig. 13 is a diagram showing data items of a membership registration master shown in Fig. 12;
Fig. 14 is a diagram showing data items in a wins master shown in Fig. 12;
Fig. 15 is a diagram showing a bonus point table stored in a ROM shown in Fig. 12;
Fig. 16 is a flowchart showing the processing procedure of the game server shown in Fig. 12; and
Fig. 17 is a flowchart showing a sub-routine of step S6 shown in Fig. 16.

### DESCRIPTION OF THE PREFERRED EMBODIMENTS

Referring to the drawings, preferred embodiments of a game providing system, a game server and a gaming machine of the present invention will be described.

### <First embodiment>

A first embodiment of the present invention will be described. A game providing system of the first embodiment is a mahjong game providing system equipped with a mahjong game server for providing a mahjong game as a game server for providing a game.

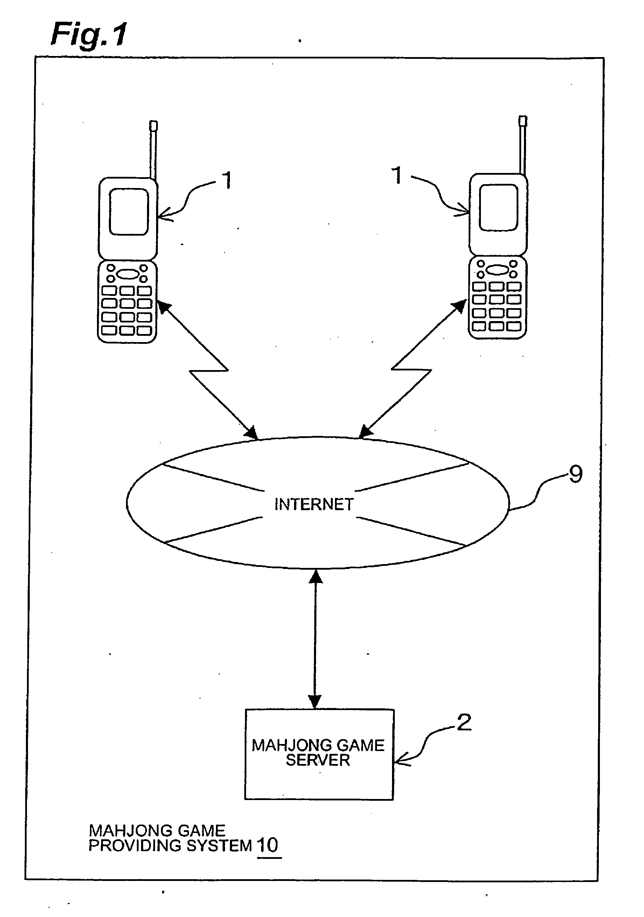

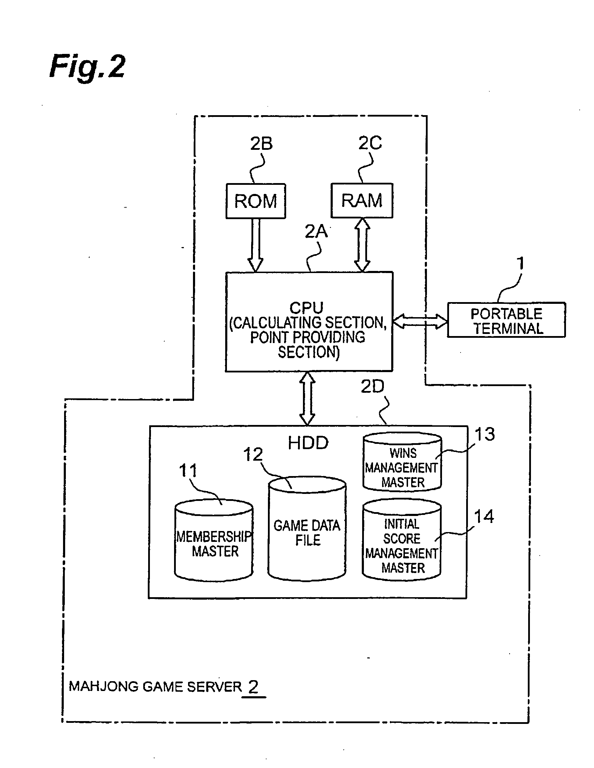

Fig. 1 is a diagram showing the entire configuration of the mahjong game providing system according to this embodiment. Fig. 2 is a block diagram showing the configuration of the mahjong game server shown in Fig. 1.

As shown in Fig. 1, the mahjong game providing system 10 comprises a portable terminal 1 and a mahjong game server (hereinafter, referred to as server) 2.

Physically, the portable terminal 1 has a CPU (Central Processing Unit), a memory, a display, a key input device such as operation keys, a communication device and the like. The portable terminal 1 is capable of connecting to the Internet by using, for example, a system such as i-mode (registered trade mark). The portable terminal 1 can connect to the server 2 through the Internet 9. In the memory, the portable terminal 1 stores information with respect to the mahjong game, which is downloaded from the server 2, and by displaying the indication on a display based on the information; thereby a mahjong game is carried out.

The server 2 comprises, as shown in Fig. 2, a CPU (Central Processing Unit) 2A as the main unit, and includes a ROM (Read Only Memory) 2B and a RAM (Random Access Memory) 2C, and has an HDD (Hard Disk Drive) 2D as an auxiliary storage device.

The CPU 2A operates in accordance with a program stored in the ROM 2B, carries out data read/write between the HDD 2D, and controls the entire operation of the server 2. Also, the CPU 2A operates as a calculating section (calculating means), which calculates the number of wins when a player carries out a mahjong game with the server 2 as the opponent. Further, the CPU 2A operates as a point providing section (point providing means), which increases the initial score of the player in accordance with the calculated number of wins.

The ROM 2B stores therein a program, which is executed by the CPU 2A, and a permanent data. The ROM 2B, in the server 2, stores therein an initial score conversion table 15, which will be described later. The RAM 2C stores therein data and programs, which the CPU 2A uses to operate.

When the CPU 2A executes the program stored in the ROM 2B, the server 2 carries out a processing to provide a mahjong game to become the opponent against a player, to the player who utilizes the portable terminal 1.

The HDD 2D stores therein a membership master 11, a game data file 12, a wins management master 13 and an initial score management master 14.

The membership master 11 is a master file, which manages the property with respect to the members of the mahjong game providing system 10. Here, the wording "member" means a player who is permitted to receive mahjong game from the mahjong game providing system 10.

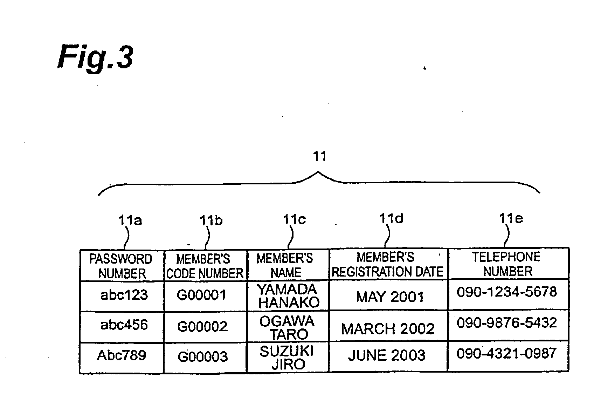

Fig. 3 is a diagram showing data items in the membership master. In the present embodiment, each of the records in the membership master 11 is provided with the items shown in Fig. 3. That is, the membership master 11 is provided with the following items such as password number 11a, member's code numbers 11b, member's names 11c, member's registration dates 11d and telephone numbers 11e. In the membership master 11, each of the items is subjected to the update processing in the member registration processing, which will be described later, and thus required data are stored. That is, owing to the processing to update each of the items, in the membership master 11, data of these items 11a-11e with respect to each of the members are registered.

The game data file 12 stores therein data (for example, figure data of characters, which are the opponents character against the player, a mahjong tile, data of winning combination, and so on) necessary for carrying out the processing to provide a mahjong game.

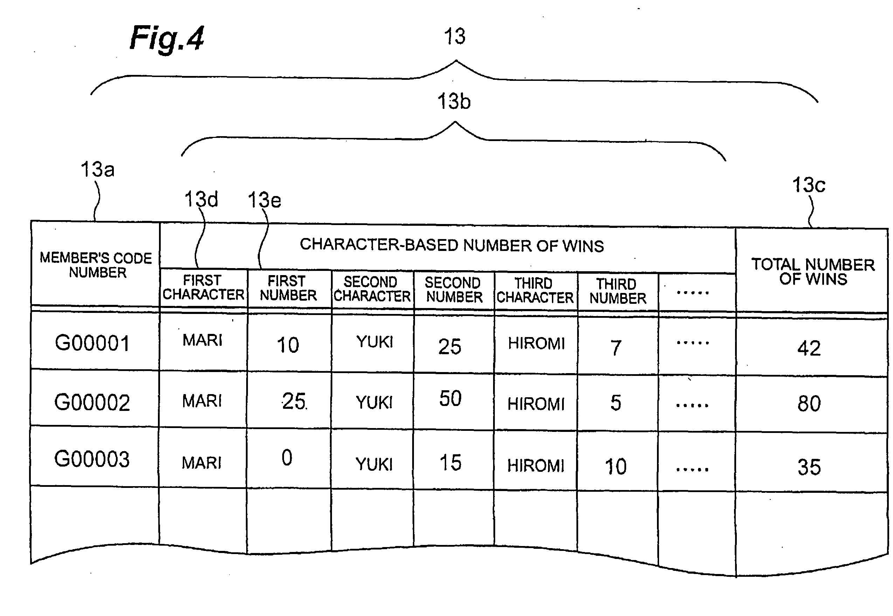

The wins management master 13 is a master file, which, when each player (member) carries out the mahjong game, manages the number of wins in the mahjong games. Fig. 4 is a diagram showing data items of the wins management master. The wins management master 13 provides items shown in Fig. 4 to each of the records.

Specifically, as shown in Fig. 4, the wins management master 13 provides items such as member's code number 13a, character-based number of wins 13b and total number of wins 13c.

Registered in the items of the member's code number 13a are the same information as that of the member's code number 11b in membership master 11. Registered in the items of the character-based number of wins 13b are values, which are the numbers of wins of each player summed up on the opponent basis (hereinafter, these values will be referred to as "the number of wins").

Specifically, provided in the items in the character-based number of wins 13b are items of first, second, third ... characters 13d, which represent characters to be opponents, and items of first, second, third ... numbers 13e for registering the numbers of wins, which are the numbers of wins summed up on the relevant character basis.

Registered in the items of the characters 13d are the information for identifying the characters, who appear in the mahjong game (in Fig. 4, text information such as "MARI" and "YUKI", which are the name of the character, respectively). Further, stored in the items of the numbers 13e are values of the number of wins of each player on the character basis. In Fig. 4, as the opponents against the player in the mahjong game, three characters ("MARI", "YUKI", "HIROMI") are given. However, the characters are not limited to these three characters. Four or more characters may be provided. To these four or more characters, items may be added in the same manner as the above three characters.

Registered in the items of the total number of wins 13c are the values, which are the number of wins of each player on the basis of player (hereinafter, the value will be referred to as "the total number of wins"). Accordingly, when the respective numbers of wins, which are registered in the character-based number of wins 13b, are summed up with respect to a specific member (for example "G00001") ("10", "25" and "7" are summed up), the obtained value agrees with the value ("42"), which is registered in the total number of wins 13c.

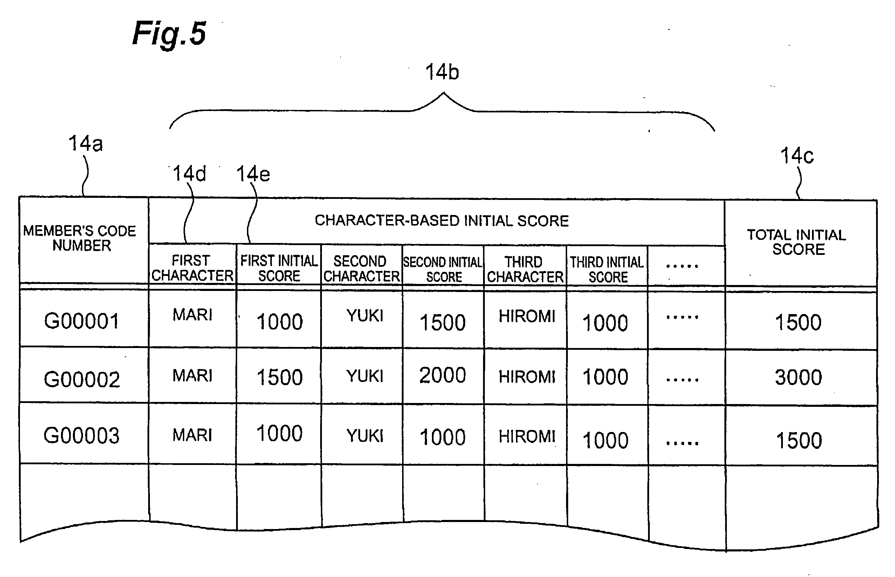

The initial score management master 14 is a master file, which manages the initial score (initial score, which is set to each player when beginning the mahjong game) necessary for each player (member) to carry out the mahjong game on the player (member) basis. Fig. 5 is a diagram showing the data items in the initial score management master. In the initial score management master 14, each record has the items as shown in Fig. 5.

Specifically, as shown in Fig. 5, in the initial score management master 14, items for member's code number 14a, character-based initial score 14b and total initial score 14c are provided.

Registered in the items of the member's code number 14a is the same information as that of the member's code number 11b in the membership master 11. Registered in the items of the character-based initial score 14b are values (hereinafter, this value will be referred to as "initial score"), which are the initial score of each player respectively set on the opponent (character) basis. That is, in the items of the character-based initial score 14b, items of first, second, third, ... characters 14d, and items of first, second, third ... initial score 14e are provided. Registered in the items of the first, second, third, ... characters 14d are the information for identifying the characters, which are the opponents. Registered in the items of the first, second, third ... initial score 14e are initial scores, which are given when the game is played against the characters. In the items of the total initial score 14c, initial score corresponding to the total number of wins 13c is set.

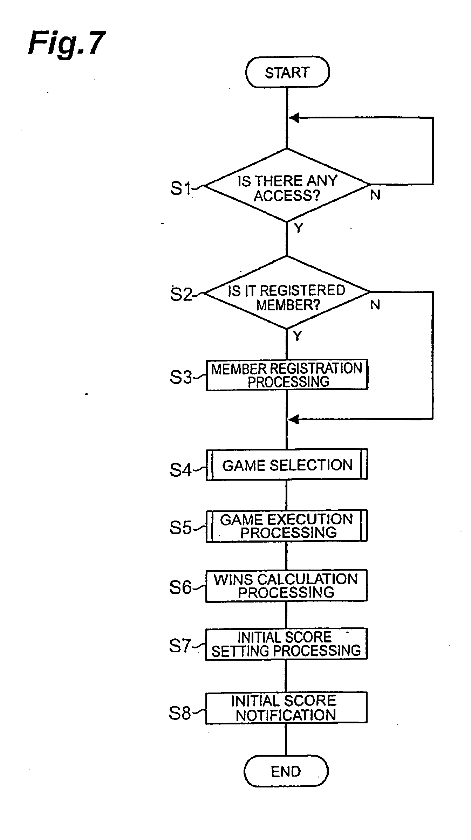

Then, the operation procedures of the mahjong game providing system 10 and the server 2, which are arranged as descried above, will be described. Fig. 7 is a flowchart showing the processing procedures of the mahjong game server. Fig. 7 shows the operation procedures of the server 2 when the server 2 provides a mahjong game to a player.

First, when a player begins a mahjong game, the player operates his/her portable terminal 1 to make access to the server 2. Here, in step S1 after the processing has started, the server 2 stands by for the access from the player. When an access is made, and when the player selects a toll connection, the processing proceeds to step S2 (in the case of free connection, a predetermined information only is displayed, and no mahjong game is provided).

In step S2, the CPU 2A in the server 2 operates and checks whether or not the player is permitted to receive the mahjong game (member or not). In this check, using the information (for example, member's code number and password), which is obtained by the access of the player, the CPU 2A searches in the membership master 11. As a result of the search, depending on whether or not the information is registered, the CPU 2A determines whether or not the player is a member. For example, in the data (record), which is registered in the membership master 11, the CPU 2A searches the following data (record); i.e., the information, which agrees with the password included in the information obtained by the access of the player, is registered in the item of the password number 11a, and the information, which agrees with the member's code number included in the information, is registered in the item of the member's code number 12b. If a record, in which information agreeing with the information obtained by the access of the player, which is registered in the corresponding item, the CPU 2A determines as the player is registered (already registered as a member), the processing proceeds to step S4. If not so, the process proceeds to step S3, and member registration processing is carried out.

In step S3, the server 2 carries out member registration processing. Here, in order to register a player, who newly accesses to the server 2 (hereinafter, referred to as "new player") as a member of the mahjong game, the CPU 2A in the server 2 reads out a predetermined piece of information from the ROM 2B, and controls the transmission to the portable terminal 1. Predetermined information includes, for example, data for forming a member registration screen, which is displayed on the portable terminal 1, and so on.

When the predetermined information is transmitted, on the input screen (for example, liquid crystal display) of the portable terminal 1, a predetermined member registration screen (not shown) is displayed. While referring to the member registration screen, the new player inputs desired information into the items (password, member's name, telephone number and the like), which are necessary for member registration. And then, the new player carries out a predetermined operation; thereby, the portable terminal 1 transmits the input information to the server 2.

In the server 2, after carrying out a predetermined check on each item transmitted from the portable terminal 1, the CPU 2A makes an access to the membership master 11. The CPU 2A creates a new record in the membership master 11, and registers the information (password, member's name, telephone number and the like), which is input by the new player, in the corresponding items in the record. Thus, the new player is registered as a new member.

Next, the server 2 proceeds to step S4, and carries out game selection processing. In step S4, before executing the mahjong game, the CPU 2A reads out data on which the player selects game settings from the ROM 2B, and transmits the same to the portable terminal 1. The data includes data necessary for displaying a selection screen through which the player selects the settings of the mahjong game such as an opponent (character) and a match (play) mode.

Upon receiving the data transmitted from the server 2, on the input screen of the portable terminal 1, a selection screen for selecting the settings of the mahjong game is displayed. For example, on the selection screen, a screen for selecting match (play) mode of the mahjong game and for selecting an opponent (character) for carrying out match of mahjong game is displayed. Here, the wording "selection of match (play) mode of mahjong game" means to select either mahjong game, in which the server 2 is the opponent of the player (hereinafter, "mahjong game match"), or mahjong game in which another player is the opponent.

When the player has selected game settings, the processing proceeds to step S5 to carry out game execution processing. In this step, in accordance with the settings in step S4 the mahjong game is executed.

Next, the process proceeds to step S6, and calculating processing of the number of wins is carried out. In this calculating processing, the CPU 2A in the server 2 operates as a calculating section for calculating the number of wins; thereby the following processing (wins calculation processing) is carried out.

### [Wins calculation processing]

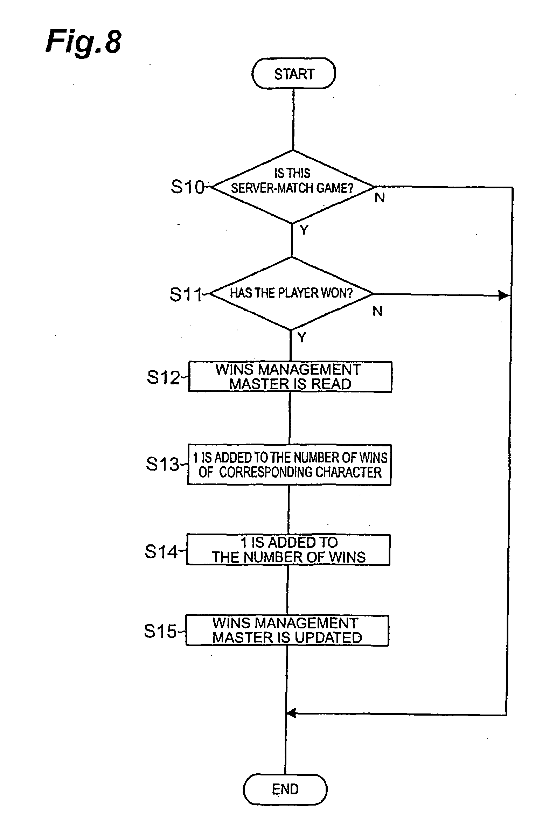

Fig. 8 is a flowchart showing the procedures of wins calculating processing. As shown in Fig. 8, when the calculating processing of the number of wins starts, the process proceeds to step S10. In step S10, the CPU 2A determines whether or not the mahjong game selected by the player is a mahjong game match. When the selected mahjong game is a mahjong game match, the CPU 2A proceeds to the processing in step S11. When the selected mahjong game is not a mahjong game match, the CPU 2A terminates the processing.

The case where the process proceeds to step S11 is the case when the player has carried out the mahjong game against a character set by the server 2. In step S11, the CPU 2A determines whether or not the player has won in the played mahjong game. When it is determined that the player has won the game, the CPU 2A proceeds to the processing in step S12. When it is determined that the player has lost the game (draw may be included), the processing is terminated.

In step S12, the CPU 2A accesses to the HDD 2D and reads out the wins management master 13. At this time, using the member's code number of the player, who has carried out the mahjong game (hereinafter, referred to as "game member's code number") as a search key, the CPU 2A searches in the wins management master 13. As a result of the search, the CPU 2A reads out a record in which the information corresponding to the member's code number of the player is registered in the item in the member's code number 13a (for example, a record of which member's code number is "G00001").

Next, the process proceeds to step S13, and from the read out record, the CPU 2A reads out a value n, which is stored in the item of the number of wins 13e of a character 13d, which has served as the opponent against the player, in the items of the character-based wins 13b. The CPU 2A adds 1 to the value n, and set the value n added by 1 to the original number 13e. In the next step S14, the CPU 2A likewise adds 1 to the value registered in the item of the total number of wins 13c in the read out record, and sets the value added by 1 to the original item in the.total number of wins 13c.

For example, assuming that the wins management master 13 shown in Fig. 4 is the state before the mahjong game is carried out, with respect to the record of the member's code number "G00001", the value stored in the item in the number 13e of the first character 13d is "10"; and the number stored in the item of the total number of wins 13c is "42". Therefore, assuming that the player with member's code number "G00001" has won a mahjong game; after the game, "10" is added with "1"; and "11" is set to the item of the number 13e corresponding to the first character 13d. And, "42" is added with "1"; and "43" is set in the item of the total number of wins 13c. Then, the process proceeds to step S15, and based on the data obtained in steps S13 and s14, the wins management master 13 is updated. That is, the read out record is written in the wins management master 13. When the step S15 is completed, the calculating processing of the number of wins is terminated.

### [Initial score setting processing]

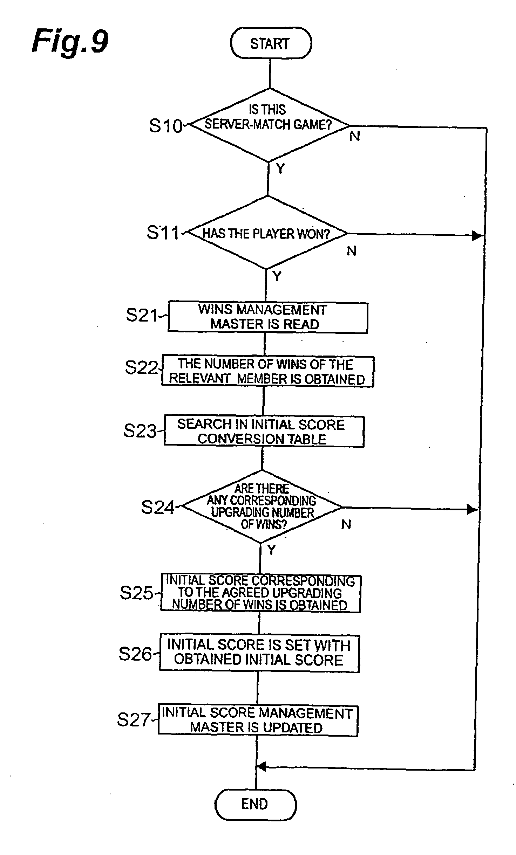

When the calculating processing of the number of wins has terminated, the processing proceeds to step S7 shown in Fig. 7 and initial score setting processing is carried out. In step S7, the CPU 2A operates as a point providing section, which increases the initial score of the player. Fig. 9 is a flowchart showing the procedures of the initial score setting processing.

In the initials score setting processing, as shown in Fig. 9, first of all, the CPU 2A executes the processing of steps S10 and S11, which are the same in the wins calculation processing. Then, the processing proceeds to step S21, and the CPU 2A accesses to the HDD 2D and reads out the wins management master 13. At this time, same as the above-described processing, using the game member's code number as a search key, the CPU 2A searches in the wins management master 13, and reads out a record (for example, a record of member's code number "G00001"), in which the information corresponding to the game member's code number is registered in an item of the member's code number 13a.

Next, the process proceeds to step S22, the CPU 2A reads out the number of wins from the record, which is read out in step S21. The numbers of wins include a number of wins on the character basis and a total number of wins. When the former is used, the number of wins (for example, first number 13e corresponding to a first character 13d), which is stored in the item of the character-based number of wins 13b, is use. When the latter is used, a total number of wins, which is stored in the item in the total number of wins 13c, is used. The former is used to increase the initial score corresponding to the character-based number of wins. The latter is used to increase the initial score, not on the character basis, but in accordance with the total number of wins of the player.

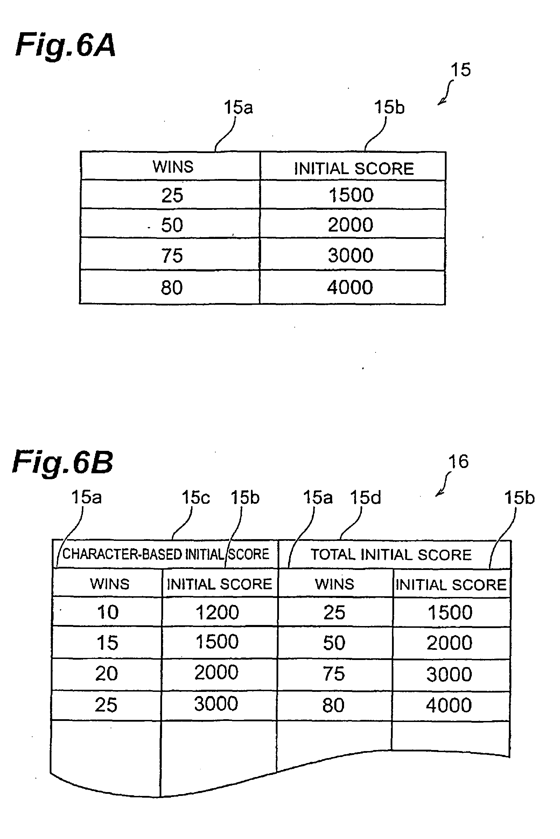

Next, the processing proceeds to step S23, and the CPU 2A makes refer to the initial score conversion table 15 stored in the ROM 2B. Fig. 6A is a diagram showing an example of the data items in the initial score conversion table. As shown in Fig. 6A, the initial score conversion table 15 is a table, which includes a wins area 15a and an initial score area 15b, and relates to store therein the numbers of wins and the initial score.

The wins area 15a stores therein values of the numbers of wins, at which the initial score of the player are increased (upgrade) (hereinafter, referred to as "upgrading number of wins"). Also, the initial score area 15b stores therein initial score values (hereinafter, referred to as "initial score") corresponding to the upgrading numbers of wins. The stored initial scores are "1500", "2000", "3000" and "4000". Any of them are set with a value larger than the initial score at the starting of the mahjong game (for example, "1000").

The initial score conversion table 15 shown in Fig. 6A is applicable to any case of the followings; i.e., the number of wins is a number of wins on the character basis or a total number of wins. However, it is preferred that the initial score conversion table 15 is used only for setting the total initial score; and in addition to this, it is preferred to provide a table for setting the character-based initial score. Fig. 6B is a diagram showing the data items in another initial score conversion table. For example, it is preferred that, as shown in Fig. 6B, the following score conversion table 16 is provided; i.e., a character-based initial score area 15c in which a wins area 15a and an initial score area 15b are made to correspond to the character basis, and a total initial score area 15d, in which is made to correspond to the total initial score, are provided separately. In the character-based initial score area 15c, the relationship between the number of wins and the initial score is set so that the upgrading number of wins and the corresponding initial score gradually increase compared with the total initial score area 15d. By setting as described above, it is possible to provide many chances to increase the initial score to the player who plays the mahjong game on the character basis.

By setting the total wins obtained in step S22 as the search key, the CPU 2A searches in the initial score conversion tables 15 and 16, and extracts the upgrading number of wins, which agrees with the search key. When searching for the upgrading number of wins on the character basis, the CPU 2A searches in the wins area 15a of the initial score conversion table 15 or in the character-based initial score area 15c of the initial score conversion table 16. When searching for the total number of wins, CPU 2A searches in the wins area 15a of the initial score conversion table 15 or in the total initial score area 15d of the initial score conversion table 16.

In the next step S24, the CPU 2A determines whether or not there resides any upgrading number of wins, which agrees with the number of wins, and when there resides the upgrading total number wins, which agrees with the number of wins, the process proceeds to step S25, and if not, the processing is terminated.

When the processing proceeds to step S25, the CPU 2A obtains an initial score corresponding to the agreed upgrading total wins from the initial score area 15b, and the processing proceeds to step S26. In step S26, the CPU 2A, sets the initial score obtained in step S25 to the corresponding initial score in the relevant item in the character-based initial score 14b or the total initial score 14c. The processing proceeds to step S27, the CPU 2A updates the initial score management master 14.

Thus, the initial score setting processing is completed. Following to the initial score setting processing, the processing proceeds to step S8 shown in Fig. 7, the server 2 notifies the initial score to the portable terminal 1 through the Internet 9 and terminates the processing. Owing to step 8, the player knows his/her initial score.

As described above, the mahjong game providing system 10 is arranged as described below. That is, when a player carries out a mahjong game and wins the mahjong game as a result of the match against a character, which is set by the server 2, the number of wins is gradually increased, and when the number of wins reaches a predetermined value, the initial score is increased. Accordingly, viewed from the player, as the number of wins increases, the initial score increase. Therefore, the player has a merit in repeating the matches against the same character (opponent). Thus, according to the mahjong game providing system 10, it is possible to encourage the player to play the game for long period of time without leading to a weariness to the mahjong game. Accordingly, the mahjong game providing system 10 can provide an interesting mahjong game to the player, and encourage the player to utilize the game.

Further, in the mahjong game providing system 10, to the player, who access thereto via the Internet, the server 2 provides the mahjong game. Accordingly, when the specifications of the mahjong game has to be changed, the specification change can be made to correspond by changing the program or the like in the server 2. That is, according to the mahjong game providing system 10, the game can be readily updated.

In the above-described embodiment, it is arranged so that, in the initial score setting processing, the CPU 2A searches in the initial score conversion tables 15 and 16 to obtain an initial score corresponding to the number of wins (hereinafter, referred to as "table acquisition"). However, the function of the "point providing means" in the present invention is not limited to function of the table acquisition, which is carried out by the CPU 2A. It may be arranged so that, for example, a formula, in which the number of wins and the initial score are related with each other, is set up, and the CPU 2A obtains an initial score corresponding to the number of wins in accordance to the formula.

### <Second embodiment>

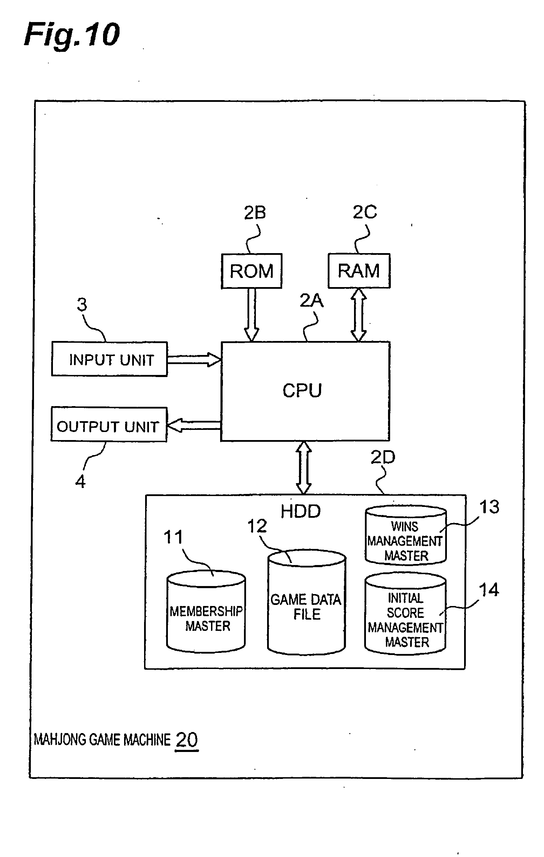

Hereinafter, a second embodiment of the present invention will be described. A gaming machine according to the second embodiment is a mahjong gaming machine, which provides a mahjong game. Fig. 10 is a block diagram showing a configuration of the mahjong gaming machine according to an embodiment of the present invention. The mahjong gaming machine 20 according to the embodiment comprises, as shown in Fig. 10, same as the server 2, with a CPU 2A as a central unit. Compared with the server 2, the following point is different therefrom; i.e., an input unit 3 and an output unit 4 are provided. The other configuration is the same as that of the server 2. In the following description, the points different from the server 2 will be mainly described; and the description of the identical points will be omitted or will be made just simply.

The mahjong gaming machine 20 may be, same as a portable terminal 1 or a PDA (Personal Digital Assistant), a portable type so as to be carried by a player, or may be a TV game type, which is provided with elements such as a CPU 2A, an input unit 3, an output unit 4 and the like in a housing and is installed in a predetermined place.

In the case of a portable type, the input unit 3 may comprise predetermined operation buttons. In this case, the operation buttons are manipulated to input the information necessary for setting a mahjong game and carrying out the mahjong game. The output unit 4 may be comprised of a liquid crystal display device. The output unit 4 displays images such as characters and mahjong tiles, which constitute the mahjong game, the numbers of wins, the initial score of the player and the like.

In the case of a TV game type, the input unit 3 may be comprised of predetermined operation buttons and input keys. In this case, using the predetermined operation buttons and the input keys, the information necessary for setting the mahjong games and carrying out the mahjong games is input. The output unit 4 may be comprised of a liquid crystal display device or a CRT. The output unit 4 displays images such as characters and mahjong tiles, which constitute the mahjong game, the number of wins, the initial score of the player and the like.

When carrying out a mahjong game using the mahjong gaming machine 20, the processing from step S4 to step S8 in the flowchart shown in Fig. 7 is executed. That is, a player him/herself owns the mahjong gaming machine 20, and can use the same freely via no Internet 9. Accordingly, in the mahjong gaming machine 20, it is conceivable that access check of the player in step S1 and the member registration processing in steps S2 and S3 are not necessary.

In this case, in the mahjong gaming machine 20, after the power is turned ON (and/or after coin insertion), the processing proceeds to step S4. First of all, the CPU 2A reads out the data, which is necessary to display the selection screen for selecting the settings of the mahjong game from the ROM 2B and displays the same on the output unit 4. Then, a screen for selecting opponent (character), against whom a mahjong game match is carried out, is displayed on the output unit 4. When the predetermined settings are completed, the processing proceeds to step S5, game execution processing is carried out. In this step, the mahjong game is carried out in accordance with the settings in step S4. The processing further proceeds to step S6, and the calculating processing of the number of wins is carried out. And then, the initial score setting processing is carried out in the next step S7. After that, in step S8, a display for notifying the initial score is made.

Accordingly, in the mahjong gaming machine 20 also, same as the server 2, it is arranged so that, when a player carries out a mahjong game, plays the game against the character set by the mahjong gaming machine 20, and wins the mahjong game, the number of wins is gradually increased, and when the number of wins reaches a predetermined value, the initial score is increased. Accordingly, the player has a merit of repeating matches against the same character (opponent), and is encouraged to carry out the game for long period of time without getting tired of the mahjong game. Therefore, according to the mahjong gaming machine 20, an interesting mahjong game is provided to the player, and the player is encouraged to utilize the game.

### <Third embodiment>

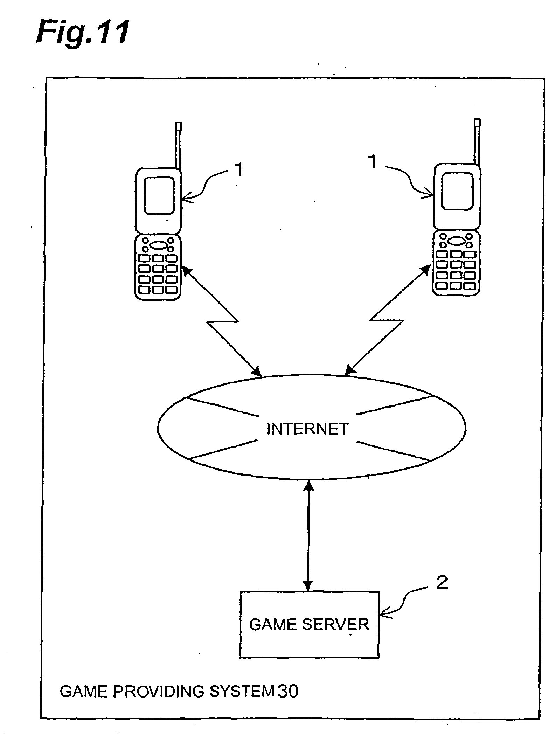

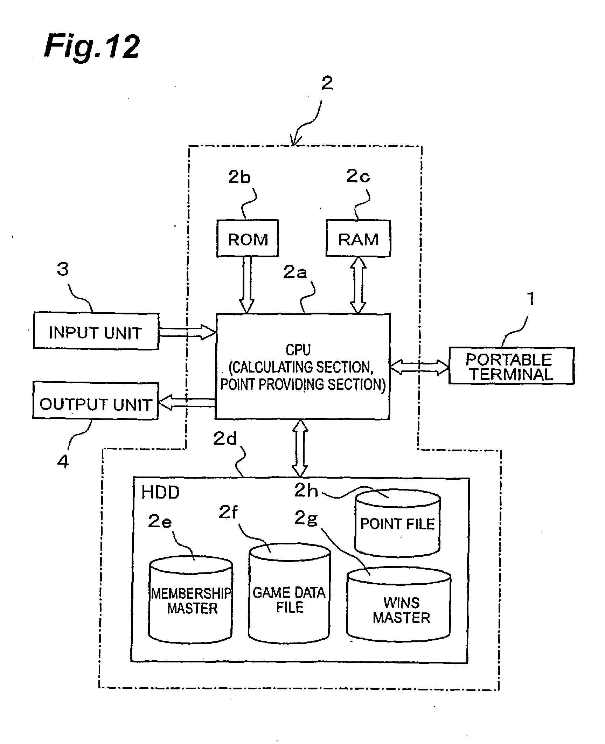

Hereinafter, referring to drawings, a third embodiment of the present invention will be described. Fig. 11 is a diagram typically showing a game providing system according to an embodiment of the present invention. Fig. 12 is a block diagram showing the configuration of the game server shown in Fig. 11.

As shown in Fig. 11, the game providing system 30 according to the third embodiment comprises a portable terminal 1 such as a cellular phone, which can be connected to the Internet by means of a system such as i-mode (registered trade mark) and a game server 2 to which the portable terminal 1 is connected via the Internet. As shown in Fig. 12, the game server 2 comprises a CPU (Central Processing Unit) 2a, a ROM (Read Only Memory) 2b, a RAM (Random Access Memory) 2c and an HDD (Hard Disk) 2d and the like. In the HDD 2d, a membership master 2e, a game data file 2f, a wins master 2g and a point file 2h and the like are built in.

The CPU 2a executes a program stored in the ROM 2b, thereby exchanges data among the portable terminal 1, the input unit 3 and the output unit 4; and temporarily stores a predetermined data in the RAM 2c. The CPU 2a makes refer to the data, which is temporarily stored in the RAM 2c, and the data stored in the a membership master 2e, a game data file 2f, a wins master 2g and a point file 2h in the HDD 2d; and thus, executes a predetermined processing.

In the game server 2 according to the third embodiment, with respect to a member who accesses thereto via the Internet through the portable terminal 1 and plays predetermined games in the game site, the CPU 2a functions as a point providing section (point providing means), which provides points exchangeable for predetermined goods or services (for example, a timer application, incoming images, incoming sounds and the like for portable terminal) as bonus point.

In the processing to provide the bonus point, the CPU 2a provides bonus point, which increase in accordance with the number of wins, at every predetermined number of wins with respect to a particular character, who is the opponent character in the game that the member has played. The CPU 2a functions as a calculating section (calculating means), which calculates the number of wins.

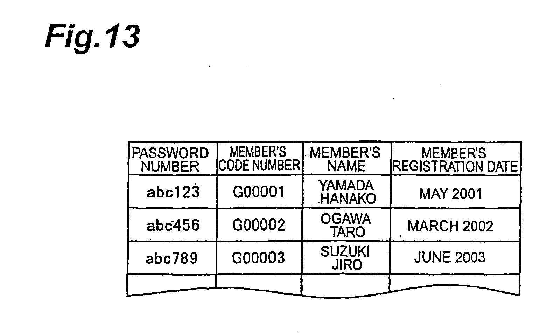

In order to achieve the processing, in the HDD of the game server 2, the membership master 2e is provided. Fig. 13 is a diagram showing the data items in the membership registration master shown in Fig. 12. In the membership master 2e, items shown in Fig. 13 such as passwords, member's code numbers, member's names, member's registration date are recorded. At every new member processing, the data (records) including the information corresponding to these items are updated and stored in the membership master 2e.

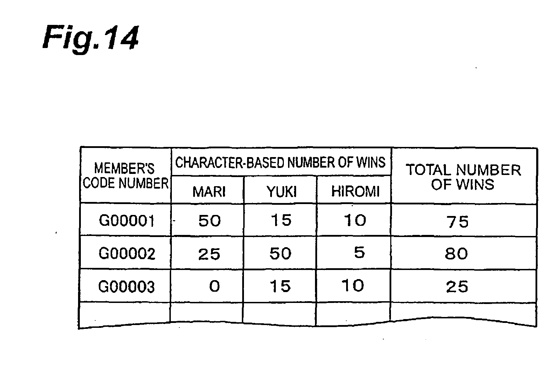

In the HDD of the game server 2, a wins master 2g is provided. Fig. 14 is a diagram showing the items in the wins master shown in Fig. 12. In the wins master 2g, as shown in Fig. 14, each item for character-based number of wins and the total number of wins are provided to be related to the member's code number. The information corresponding to each of the items is updated as needed and stored in the total wins master 2g.

Further, in the HDD of the game server 2, a point file 2h is provided. The provided bonus point is added to the total point and stored in the point file 2h.

The character-based number of wins is a number that a member has won against the predetermined characters (for example, MARI, YUKI and HIROMI), which are selected as the opponents in the games, on the character basis. Also, the total number of wins is a total number of wins in which the numbers of wins on the character basis are summed up.

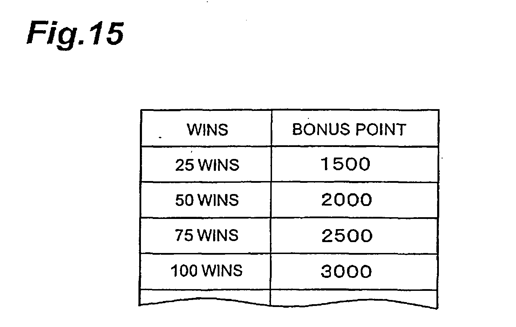

In the server 2, in order to provide the bonus point, which increases in accordance with the character-based number of wins, to the member at every predetermined number of wins, a bonus point table, in which predetermined numbers of wins and bonus points are made to correspond to each other, is stored in, for example, the ROM 2b. Fig. 15 is a diagram showing the bonus point table, which is stored in the ROM shown in Fig. 12. In order to allow the contents to be written, the bonus point table may be stored in the RAM 2c.

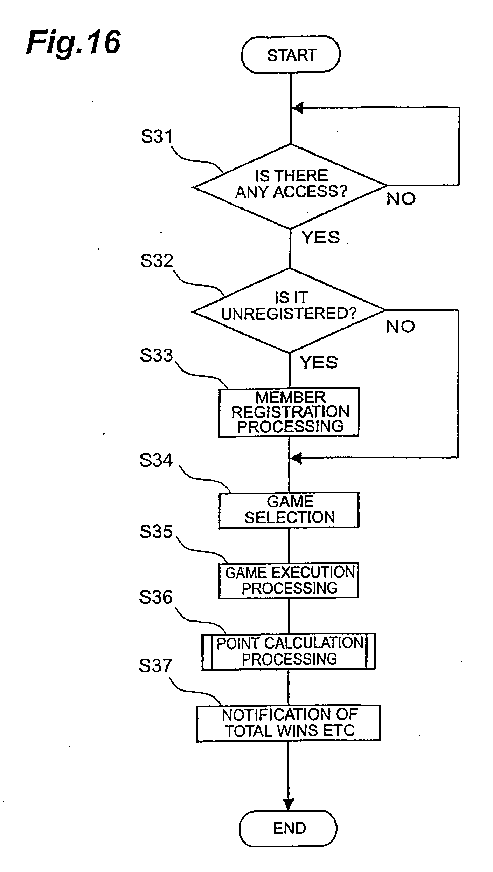

Hereinafter, the processing executed by the game server 2 will be described. Fig. 16 is a flowchart showing the processing procedures of the game server shown in Fig. 12. In the game server 2 according to the third embodiment, a variety of processing is executed in accordance with the flowchart shown in Fig. 16.

As shown in Fig. 16, first of all, in step S31, the CPU 2a repeats to check whether or not an access has been made from the portable terminal 1 to the game server 2, which provides the game site, until it is judged as "YES" by means of the input of a password.

When the judgment result in step S31 is "YES", the processing proceeds to step S32. In step S32, the CPU 2a judges whether or not a player, who has accessed to the game site from the portable terminal 1, is registered as a member. This judgment is made by determining whether or not the member's code number corresponding to the password number, which is input by the player of the game through the top screen displayed on the portable terminal 1, is included. At this time, the CPU 2a makes reference to the membership master 2e.

When the judgment result is "YES", and it is judged that the player is not registered as a member, the processing of membership registration is executed in the next step S33. In this processing, through the top screen displayed on the portable terminal 1, the player is requested to input the information into each of the items of the membership master 2e in Fig. 3. And when the information about each of the items has been input through the portable terminal 1, the information in the items is stored in the membership master 2e.

On the other hand, when the judgment result in step S32 is "NO", and the player of the game is judged as a registered member, the processing proceeds to step S34 next to step S33. In step S34, the processing to make the registered member select a game is carried out. In this processing, on the top screen displayed on the portable terminal 1, it is requested to select the game to be played. As for the kinds of the games, mahjong, poker, pachinko, pachinko-slot game, slot machine game and so on are available.

In step S34, when the member selects, for example, a poker game as the game to be played through the top screen on the portable terminal 1, in the next step S35, the selected poker game is downloaded from the game data file 2f and displayed on the screen of the portable terminal 1. The member selects an opponent character of the poker game displayed on the screen of the portable terminal 1 and begins the game. For example, "MARI" (refer to Fig. 4) is selected as the opponent character, and the game is started.

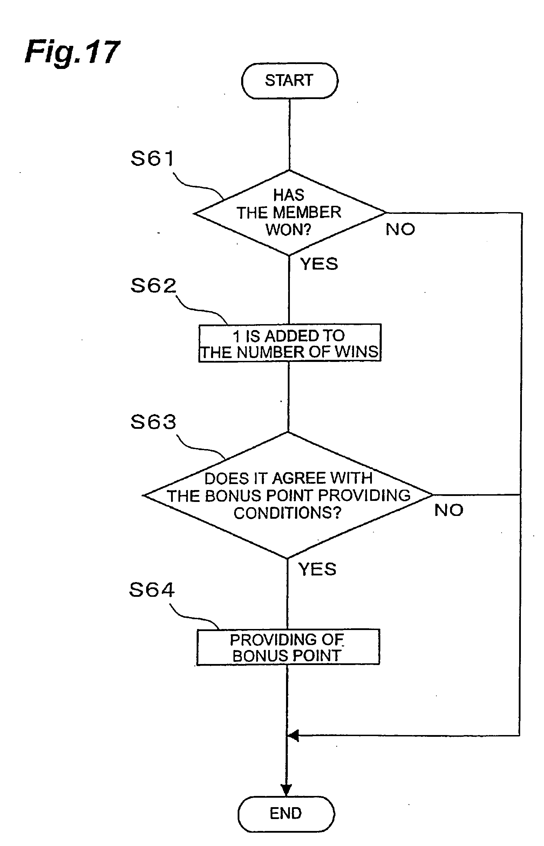

When the poker game has terminated, in the next step S36, point calculating processing corresponding to the win/lost of the poker game is carried out. Fig. 17 is a flowchart showing a sub-routine of step S36 shown in Fig. 16. The point calculating processing is executed in accordance with the sub-routine shown in Fig. 17.

In the sub-routine shown in Fig. 17, it is judged whether or not the member has won the poker game against "MARI" selected as the opponent thereof (S61). When the judgment result is "YES", and the member has won the game against "MARI", the number of wins is counted as "1", and the number of wins and the total number of wins with respect to "MARI" in a column corresponding to the member's code number in the wins master 2g (refer to Fig. 14) is increased by "1" respectively, and updated by the CPU 2a (S62) .

In the next step S63, the CPU 2a judges whether or not the updated number of wins with respect to the "MARI" meets the bonus point providing conditions. That is, it is determined whether or not the updated number of wins with respect to "MARI" agrees with any of the number of wins in the bonus point table (refer to Fig. 15).

Here, when the updated number of total wins with respect to "MARI" reaches, for example, "50", and agrees with "50" in the bonus point table (refer to Fig. 15), and the judgment result is "YES" in step S63, in the next step S64, bonus point "2000" corresponding to "50" in the bonus point table is added to the total point in the point file 2b to provide the same. The total point are updated with the total point added with this bonus point "2000".

When the judgment result in step S61 and step S63 is "NO", the sub-routine in Fig. 17 is terminated without carrying out the processing in step S64.

When the sub-routine in Fig. 17 has terminated, the processing proceeds to step S37 in the flowchart in Fig. 16, and the character-based number of wins and the total number of wins, which have been updated corresponding to the win/loss of the game and total point added with the bonus point are notified to the screen on the portable terminal 1.

Here, as shown in the bonus point table in Fig. 15, the bonus point, which is added to the total point in the point file 2h in the point calculating processing in step S36, increases corresponding to the number of wins as listed below; i.e., when the number of wins is "25", the bonus point is 1500 point; when "50", 2000 point; when "75", 2500 point; and when "100", 3500 point and the like.

As described above, in the game providing system provided with the game server 2 of one embodiment, in accordance with the number of wins with respect to the particular character "MARI", which is selected as the opponent character in the poker game, the bonus point; which increases in accordance with the number of wins, is provided to the member. Accordingly, as the number of wins with respect to the particular character is increased; the member expects that the larger bonus point be provided at every predetermined number of wins, and accesses to the game site. Thus, the access ratio to the game site can be increased.

The present invention is not limited to the above-described third embodiment. For example, the number of wins shown in the bonus point table in Fig. 15 may be the total number of wins to the game itself. The total number of wins and the bonus points shown in the bonus point table may be appropriately changed.

As the first to third embodiments of the present invention described above, according to the present invention, every time when the number of wins of the game, which a member has played, reaches a predetermined number, a bonus point or a predetermined point such as initial score is provided to the member corresponding to the number of wins. Accordingly, the utilization of the game is encouraged. More particularly, according to the present invention, the player is provided with an interesting game, which encourages the player to use the game for long period of time without getting tired of.

Further, when the bonus point is provided as a predetermined point, with increasing the number of wins, the member expects the more bonus point is provided; thus, the member accesses to the game site. Therefore, according to the present invention, the ratio of access to the game site can be increased.

The principles of the present invention have been illustrated and described in the preferred embodiments, but it is apparent to a person skilled in the art that the present invention can be modified in arrangement and detail without departing from such principles. We, therefore, claim rights to all variations and modifications coming with the spirit and the scope of claims.

## Claims

1. A game providing system, comprising:
a portable terminal for making connection to the Internet; and
a game server for providing a game to the portable terminal, which is connected to the game server via the Internet,
wherein, the game server includes
calculating means that calculates a number of wins by summing up a number that a player of the portable terminal has won the game, and
point providing means that provides a predetermined point to the player in accordance with the number of wins calculated by the calculating means.

2. The game providing system according to claim 1, wherein
the game server provides a mahjong game as the game,
the point providing means increases initial score of the player as the predetermined point.

3. The game providing system according to claim 1, wherein the game server provides an exchangeable point for predetermined goods or services as the predetermined point, and
the point providing means provides a bonus point, which increases in accordance with the number of wins, in every time when the number of wins of the player of the portable terminal in the game reaches a predetermined number.

4. The game providing system according to any one of claims 1 to 3, wherein the calculating means calculates the number of wins for every particular character, which is an opponent character in the game.

5. A game server for providing a game to a portable terminal connected thereto via the Internet, comprising:
calculating means that calculates a number of wins by summing up the number that a player of the portable terminal has won the game, and
point providing means that provides a predetermined point to the player in accordance with the number of wins calculated by the calculating means.

6. The game server according to claim 5, wherein
the game server provides a mahjong game as the game, and
the point providing means increases initial score of the player as the predetermined point.

7. The game server according to claim 5, wherein the game server provides an exchangeable point for predetermined goods or services as the predetermined point, and
the point providing means provides a bonus point, which increases in accordance with the number of wins, in every time when the number of wins of the player of the portable terminal in the game reaches a predetermined number.

8. The game server according to any one of claims 5 to 7, wherein the calculating means calculates the number of wins for every particular character, which is an opponent character in the game.

9. A gaming machine for providing a game, comprising:
calculating means that calculates a number of wins by summing up the number that a player of the portable terminal has won the game, and
point providing means that provides a predetermined point to the player in accordance with the number of wins calculated by the calculating means.

10. The gaming machine according to claim 9, wherein the gaming machine provides a mahjong game as the game, and
the point providing means increases the initial score of the player as the predetermined point.

11. The gaming machine according to claims 9 or 10, wherein the calculating means calculates the number of wins for every particular character, which is an opponent character in the game.
